(19) Europäisches Patentamt
European Patent Office
Office européen des brevets

(11) Veröffentlichungsnummer: **0 301 409 A2**

# (12) EUROPÄISCHE PATENTANMELDUNG

(21) Anmeldenummer: **88111757.6**

(51) Int. Cl.4: **C08G 65/40**

(22) Anmeldetag: **21.07.88**

(30) Priorität: **29.07.87 DE 3725058**

(43) Veröffentlichungstag der Anmeldung: **01.02.89 Patentblatt 89/05**

(84) Benannte Vertragsstaaten: **DE FR GB IT NL**

(71) Anmelder: **Röhm GmbH**
**Kirschenallee Postfach 4242**
**D-6100 Darmstadt 1(DE)**

(72) Erfinder: **Besecke, Sigmund, Dr.**
**Auf dem Kreuzberg 6**
**D-6104 Seeheim-Jugenheim(DE)**
Erfinder: **Knebel, Joachim, Dr.**
**Dieselstrasse 20**
**D-6100 Darmstadt(DE)**
Erfinder: **Schröder, Günter, Dr.**
**Leipziger Strasse 7**
**D-6105 Ober-Ramstadt(DE)**
Erfinder: **Ude, Werner, Dr.**
**Birngartenweg 115**
**D-6100 Darmstadt-Arheilgen(DE)**

## (54) Thermoplastisch verarbeitbare Polyarylenether mit 9,9-Bis-(4'-hydroxyphenyl)fluoren.

(57) Hochtemperaturbeständige, thermoplastisch verarbeitbare Polyarylenether mit wiederkehrenden Struktureinheiten der allgemeinen Formel (1)

$$\left[(-A-O-B-O)_m-(-A-O-C-O)_n\right] \quad (1),$$

worin A: 4,4'-bzw. 4,4''-Benzophenon-Einheiten der Formel

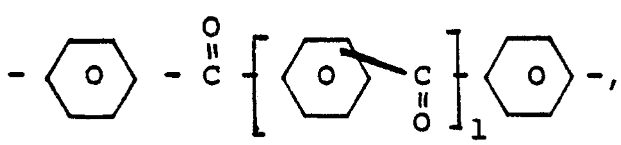

mit l = O oder 1,

B: 9,9-Bis(4'-phenyl)fluoren-Einheiten der Formel

EP 0 301 409 A2

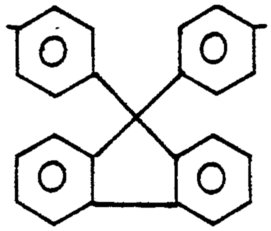

und

C: 2,2-Bis(4-phenyl)propan-Einheiten der Formel

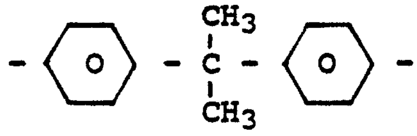

sind, die über Sauerstoffatome etherartig miteinander verbunden sind, wobei die Zusammensetzung der Polyarylenether durch m und n, für die das Molverhältnis m : n = 30 : 70 bis 90 : 10 gilt, gegeben ist und die Folge der B- oder C-enthaltenden Teilstücke, statistisch sein kann.

## Gebiet der Erfindung

Die Erfindung betrifft aromatische Polyether-Kunststoffe mit hohen Glas- und Zersetzungstemperaturen und Verfahren zu ihrer Herstellung. Sie sind schwer brennbar und lassen sich thermoplastisch verarbeiten.

## Stand der Technik

Aromatische Polyether mit Kunststoffeigenschaften gehoren z.T. schon lange zum Stand der Technik und haben teilweise auch als technische Produkte wirtschaftliche Bedeutung erlangt. Für viele Anwendungszwecke vorteilhafte gemeinsame Eigenschaften der aromatischen Polyether sind ihre über 200 Grad C liegende Erweichungstemperatur und ihre thermoplastische Verarbeitbarkeit.

Zu den aromatischen Polyethern gehören neben Polymeren wie dem Polyxylenol, das als PPO bekannt ist, und das abwechselnd aus aromatischen- und Ethersauerstoffeinheiten in der Polymerkette aufgebaut ist, auch Polymere, die außer den charakteristischen Aromaten- und Sauerstoffeinheiten in der Polymerhauptkette noch weitere charakteristische Atomgruppen, wie

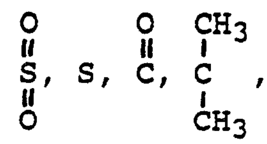

enthalten.

Wohl bekannt sind hier aromatische Polyäthersulfone, die auch als Polyarylsulfone bezeichnet werden und als technische Produkte auf dem Markt sind. (Ullmanns Encyclopädie der technischen Chemie, 4. Auflage, Band 15, Seiten 429 bis 435 und US-Patent 4 175 175).

In der US 4 492 805 sind weiter aromatische Polyether mit phosphorhaltigen Strukturelementen, z.B. Triphenylphosphinoxideinheiten, in der Polymerkette beschrieben, die sich als schwerbrennbare bzw. unbrennbare Kunststoffe auszeichnen. Die Herstellung aromatischer Polyether kann im allgemeinen durch Polykondensation der chemischen Bausteine erfolgen. So werden beispielsweise die phosphorhaltigen Polyarylenether der US 4 492 805 durch Polykondensation eines bifunktionellen Phosphins bzw. Phosphinoxides, insbesondere der entsprechenden Dihalogenverbindung, mit einer weiteren bifunktionellen aromatischen Verbindung, insbesondere einer Bishydroxiverbindung, erhalten.

Die chemischen Bausteine für die Herstellung von Polyarylenethern durch Polykondensation sind vorzugsweise symmetrische Verbindungen des Typs I

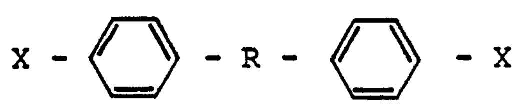 I

mit R: $SO_2$; CO; 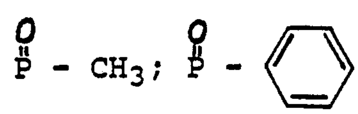 ;

und X: F; Cl;

und symmetrische Verbindungen des Typs II

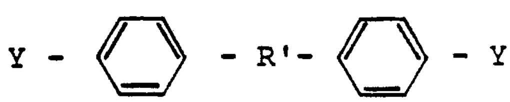 II

mit R′: kovalente Einfachbindung;

O; 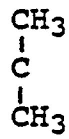 ;

und Y : OH;

Als chemische Bausteine für die Herstellung der aromatischen Polyether kommen aber auch Verbindungen der Typen I und II in Frage, in denen die reaktiven Gruppen X bzw. Y ganz oder zur Hälfte gegen Y bzw. X ersetzt sind.

In Polymer Science USSR, 14, (1972), 2962 - 2970, und in Polymer Journal, Vol. 19, 78 - 79 (1987), sind aromatische Polyether des "Cardo" Typs beschrieben. Sie werden hergestellt durch Polykondensation von Dihalogenverbindungen des Typs I, wobei R $SO_2$ oder CO ist, mit Bisphenolen des Typs II, in denen R' eine cyclische organische Gruppe ist, von welcher ein Kohlenstoffatom das die beiden aromatischen Ringe von Verbindungen des Typs II verbindende Glied ist. Dieses quartäre Kohlenstoffatom ist nach der Polykondensation Teil der Polymerhauptkette. Beispiele solcher Bisphenole sind danach u.a. Phenolphthalein und Phenolfluoren (= 9,9-Bis-(4'-hydroxyphenyl)fluoren).

Phosphorhaltige Polyarylenether, die analog denjenigen der US 4 492 805 aufgebaut sind, aber "Cardo"-Bausteine enthalten, sind in den deutschen Anmeldungen P 35 21 123.7 und P 35 21 124.5 genannt.

Polyarylenether auf Basis 9,9-Bis(4'-hydroxyphenyl)fluoren wie sie nach Polymer Journal, Vol. 19, 78 - 79 (1987) erhältlich sind, zeichnen sich durch hohe Wärmefestigkeiten, bestimmt über die Glastemperatur der Polymeren, aus. Der durch Umsetzung von 4,4'-Difluorbenzophenon mit 9,9-Bis(4'-hydroxyphenyl)-fluoren erhältliche Polyether weist einen Tg-Wert von 252 Grad C auf. Eigene Untersuchungen an Werkstücken dieses Polymeren ergaben, daß mit Reißdehnungswerten von etwa 10 % Kunststoffe aus diesem Polymeren relativ spröde Materialien sind.

Polyarylenether mit sulfongruppen- oder stickstoffhaltigen Bausteinen entwickeln im Brandfall toxische Gase, wie $SO_2$ oder Stickoxid oder auch HCN. Solche Schadstoffe sind aus einem Polyarylenether, dessen Bausteine als Elemente nur C, H und O enthalten, nicht zu erwarten.

## Aufgabe und Lösung

Der Stand der Technik weist aus, daß die bekannten Polyarylenether in ihren Eigenschaftsprofilen deutlich voneinander abweichen. Bei ihrer Verwendung als Kunststoffe zeigen sich daher neben ihren hervorragenden Eigenschaften auch ihre Mängel. Es war die Aufgabe, Kunststoffe zu entwickeln, die amorph, thermoplastisch verarbeitbar, stabil, z.B. hydrolysestabil, und zäh sind, mit relativ hohen Wärmefestigkeiten von etwa 200 Grad C und geringen Wasseraufnahmen, und die im Brandfall keine schwefel- und stickstoffhaltigen toxischen Gase freisetzen und sehr niedrige Rauchgasdichten aufweisen.

Es wurde gefunden, daß Kunststoffe, die das gewünschte Eigenschaftsprofil aufweisen, Polyarylenther sind, die Ether-überbrückte
4,4'- bzw. 4,4''-Benzophenon-Einheiten der Formel :

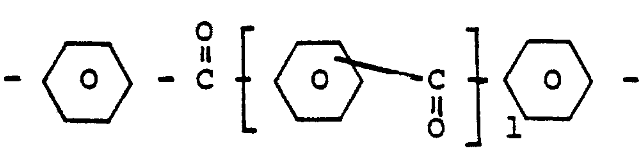

A

mit 1 = 0 oder 1,
9,9-Bis(4'-phenyl) fluoren-Einheiten der Formel:

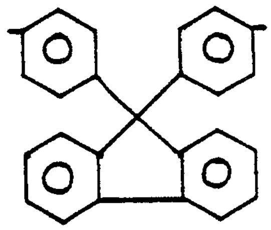

B und

2,2-Bis(4-phenyl)propan-Einheiten der Formel:

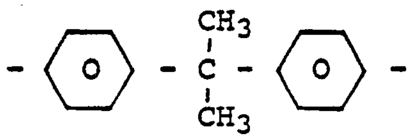

C

enthalten.

Die erfindungsgemäßen Polyarylenether lassen sich so durch die wiederkehrenden Struktureinheiten der allgemeinen Formel (1)

$$\left[ (A - O - B - O)_m - (A - O - C - O)_n \right] \quad (1)$$

darstellen, worin A, B und C die über das O-Atom etherartig verknüpften, oben angegebenen Bausteine des Polymeren bedeuten und für m und n das Mol-Verhältnis

m : n = 30 : 70 bis 90 : 10, bevorzugt
40 : 60 bis 80 : 20, ganz besonders bevorzugt
50 : 50 bis 70 : 30

gilt, und die Verteilung, d.h. die Folge der B- oder C-enthaltenden Struktureinheiten im Makromolekül sowohl statistisch als auch alternierend vorliegen kann.

Thermoplastisch verarbeitbar zu transparenten, zähen Kunststoffen sind die erfindungsgemäßen Polyarylenether der allgemeinen Formel I mit Molekulargewichten > 20 000 (bestimmt als Mw nach der Gpc-Methode), insbesondere solche mit Molekulargewichten (Mw) größer 30 000. Vorteilhaft werden die neuen Polymeren durch Polykondensation der Dihalogenderivate von A, beispielsweise von 4,4′-Difluorbenzophenon, mit einem Gemisch der Bisphenole 9,9-Bis(4′-hydroxyphenyl)fluoren und 2,2-Bis(4-hydroxyphenyl)-propan (Bisphenol A), in einem Molverhältnis der beiden Bisphenole von 0,4 : 0,6 bis 0,6 : 0,4, hergestellt.
Die Erfindung betrifft daher hochtemperaturbeständige, thermoplastisch verarbeitbare Polyarylenether mit wiederkehrenden Struktureinheiten der allgemeinen Formel (1):

$$\left\{ (A - O - B - O)_m - (A - O - C - O)_n \right\} \quad (1),\ \text{worin}$$

A : 4,4′ bzw. 4,4″-Benzophenon-Einheiten der Formel

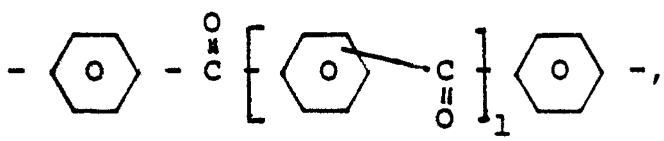

mit 1 = 0 oder l,

B: 9,9-Bis(4′-phenyl)fluoren-Einheiten der Formel

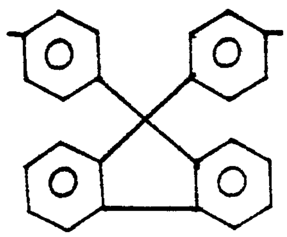

und

C: 2,2-Bis(4-phenyl)propan-Einheiten der Formel

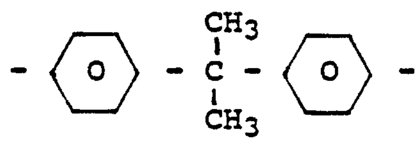

sind, die über Sauerstoffatome etherartig miteinander verbunden sind, wobei die Zusammensetzung der Polyarylenether durch m und n, für die das Mol-Verhältnis m : n = 30 : 70 bis 90 : 10, bevorzugt 40 : 60 bis 80 : 20, ganz besonders bevorzugt 50 : 50 bis 70 : 30 gilt, gegeben ist und die Folge der B- oder C-enthaltenden Teilstücke, statistisch oder alternierend sein kann.

Die thermoplastisch verarbeitbaren neuen Polymere haben Molekulargewichte (Mw) > 20 000 und werden durch Co-Polykondensation hergestellt.

Mit den neuen Polymeren stehen jetzt Kunststoffe zur Verfügung, deren technisch hochwertige Eigenschaften von den bisher bekannten hochtemperaturbeständigen Kunststoffen immer nur teilweise erreicht werden. Die erfindungsgemäßen Copolymeren haben Glastemperaturen im Bereich von 160 bis 220 Grad C (gemessen mit der DSC), sind mit Reißdehnungen von meist über 20 % und mit Elastizitätsmodulen um 3 000 MPa zäh-elastische Materialien, die weiter bei der UL94-Brandklassifizierung mindestens die Klasse VI und zumeist die Klasse VO erreichen, sehr niedere Rauchgasdichten haben und im Brandfall keine toxischen Schwefel- bzw. Stickstoffhaltigen Gase entwickeln. Aus den Polymeren (z.B. durch thermoplastische Verarbeitung) erhaltene Werkstücke sind transparent und zeigen Wasseraufnahmen bis maximal 0,7 % (Sättigungswert bei 23 Grad C Wasserlagerung). Diese geringen Wasseraufnahmen tragen maßgebend zur hohen Dimensionsstabilität entsprechender Werkstücke aus den neuen Polymeren bei. Infolge Fehlens von besonders hydrolyse-empfindlichen Gruppen zeichnen sich die neuen Materialien auch durch entsprechende Hydrolysebeständigkeit aus.

Demgegenüber weisen bekannte Spezialkunststoffe neben ausgezeichneten Eigenschaften weniger geeignete aus, wie: (Teil)kristallinität und keine Transparenz (PPO; Noryl ®: PPO-Blends, PEEK ®), zu niedrige Wärmeformbeständigkeiten (Tg Grad C) (Noryl ®: 155 Grad C, Makrolon ®:150 Grad C), oder schlechteres Brandverhalten (Polysulfon und Polyethersulfon: toxische, schwefelhaltige Gase; Polyimide wie z.B. Ultem: toxische stickstoffhaltige Gase). Auch gegenüber den bekannten Polykondensaten der Zusammensetzung - A - O - B - O -, die wie schon beschrieben spröde Kunststoffmaterialien geben, und solchen der Zusammensetzung - A - O - C - O - , die Polymere mit relativ niedriger Glastemperatur (Tg ~ 150 Grad C) darstellen, zeichnen sich die neuen Co-Polykondensate der Formel (1), mit den etherüberbrückten A-, B- und C-Bausteinen im angegebenen m : n-Verhältnis, als Werkstoffe mit gehobenen Eigenschaften aus.

Durchführung der Erfindung

Für die Herstellung der neuen aromatischen Polyether (1) mit den aromatischen Grundbausteinen A, B und C durch Polykondensation werden im wesentlichen bifunktionelle Monomere A', B' und C' eingesetzt, die sich von den Grundbausteinen A, B und C durch jeweils zusätzliche funktionelle Gruppen unterscheiden. Als reaktive Verbindungen werden insbesondere solche mit Halogen, vorzugsweise mit Fluor und Chlor, und solche mit phenolischen Hydroxylgruppen, die vorzugsweise als Phenolat zur Reaktion gebracht werden, eingesetzt. Neben Dihalogenverbindungen und Bisphenolen, wie sie u.a. weiter oben als Verbindungen des Typs I und Verbindungen des Typs II beschrieben sind, kommen als bifunktionelle Ausgangsverbindungen auch solche infrage, die im gleichen Molekül sowohl eine Halogengruppe als auch eine phenolische Gruppe enthalten. Die Verbindungen A', B' und C' werden in einem solchen Verhältnis zueinander eingesetzt, daß einmal das erfindungsgemäße Verhältnis m : n in (1) eingestellt wird und daß zum anderen die miteinander reagierenden Halogen- und HO-Gruppen äquivalent sind. Dadurch wird erreicht, daß die erfindungsgemäßen Polykondensate Molekulargewichte (Mw) von über 20 000 und Kunststoffeigenschaften haben.

Bei der Herstellung der neuen Polyarylenether sind die anzuwendenden Polykondensationsbedingungen denen in US 4 175 175 beschriebenen und denen für die Herstellung von phosphorhaltigen Polyarylenethern in US 4 492 805 beschriebenen analog. Dies betrifft die Verwendung geeigneter Wasserschleppmittel, wie z.B. Chlorbenzol oder Xylole, und polar-aprotischer Lösungsmittel, wie u.a. Dimethylsulfoxid, Sulfolan, N,N-Dimethylformamid, N,N- Dimethylacetamid, N-Methylpyrrolidon, und die Durchführung der Polykondensation bei Temperaturen von 100 bis 300 Grad C in Gegenwart stark basischer Alkaliverbindungen, wie Alkalihydroxiden, wie Natrium-oder Kaliumhydroxid, oder wie insbesondere in Gegenwart von Natrium- oder Kaliumcarbonat.

Die Umsetzung wird praktisch bei Normaldruck bzw. bei dem, unter den Temperaturbedingungen in der Umsetzungsapparatur sich einstellenden Druck durchgeführt. Zur Bildung der erfindungsgemäßen Polymeren unter den genannten Bedingungen werden Reaktionszeiten von 30 Minuten bis etwa 50 Stunden benötigt. Die Isolierung des Polykondensats kann durch Abdestillieren des Lösungsmittels und Waschen des Rückstands mit Wasser erfolgen oder man setzt dem Reaktionsansatz Fällungsmittel wie beispielsweise Wasser oder Ethanol zu, filtriert das ausgefällte Polymerisat ab und trocknet es.

Die Ausgangsverbindungen

Für die Einführung der A-Einheiten in das Polykondensat (1) werden als reaktive Ausgangsverbindungen A' 4,4'-Difluorbenzophenon, 4,4'-Dichlorbenzophenon 4-Chlor- bzw. 4-Fluor-4'-hydroxybenzophenon und

4,4''-Dichlor-isophthalophenon
bzw. 4,4''-Dichlor-terephthalophenon

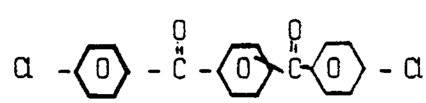

oder die entsprechenden 4,4''-Difluorverbindungen eingesetzt.

Die funktionellen Halogen- bzw. Hydroxygruppen stehen bevorzugt in den "4er-Stellungen." In den Ausgangsverbindungen A' können aber auch in untergeordneten Mengen andere Stellungsisomere vorhanden sein.

Als Ausgangsverbindungen B' und C' für die Einführung der B- und C-Einheiten werden die phenolischen Verbindungen
9,9-Bis(4'-hydroxyphenyl)fluoren und
2,2-Bis(4-hydroxyphenyl)propan, bekannt als Bisphenol A,
verwendet.

B' und C' werden im Molverhältnis

m : n = 30 : 70 bis 90 : 10, bevorzugt
40 : 60 bis 80 : 20, ganz besonders bevorzugt
50 : 50 bis 70 : 30

bei der Herstellung der neuen Polymeren eingesetzt.

Die neuen Polyarylenether können aber auch, wie dies in der Patentanmeldung P 35 21 123.7 für phosphorhaltige Polyarylenether beschrieben ist, gegebenenfalls verzweigte Strukturen besitzen. Für die Einführung von Verzweigungsstellen in den neuen Polyethern kommen als zusätzliche Ausgangsverbindungen beispielsweise 1,3,5-Tris(4′-hydroxyphenyl)benzol, 1,1,1-Tris(4-hydroxyphenyl)ethan in Betracht.

Beispiel 1

Synthese eines Polyethers aus 4,4′-Difluorbenzophenon (1), Bisphenol A (2) und 9,9-Bis(4′-hydroxyphenyl)fluoren (3) mit Molverhältnissen von (1) : (2) : (3) = 10 : 4 : 6

In einem 6 l-Vierhalskolben mit Rührer, Innenthermometer, Stickstoffzuleitung und Wasserabscheider mit aufgesetztem Rückflußkühler wurden 137,0 g (0,6 mol) Bisphenol A, 315,4 g (0,9 mol) 9,9-Bis(4′-hydroxyphenyl)fluoren, 327,3 g (1,5 mol) 4,4′-Difluorbenzophenon, 218,4 g Kaliumcarbonat, 2,25 1 N-Methylpyrrolidon und 1,35 1 techn. Xylolgemisch vorgelegt. Die Reaktionsmischung wurde unter Stickstoffatmosphäre nun mit einem Ölbad auf Rückflußtemperatur erhitzt und das sich bildende Wasser innerhalb von 2 Stunden ausgekreist. Nach vollständiger Entfernung des Wassers wurde das Xylol über den Wasserabscheider bei ca. 180 Grad C abdestilliert und das zurückbleibende Reaktionsgemisch bei dieser Temperatur so lange gehalten, bis das Molekulargewicht Mw des Polykondensats ca. 77.000 betrug (Messung: GPC, Eichung mit Polystyrol). Anschließend wurden 0,2 Mol Methylchlorid durchgeleitet.

Nach Abkühlung wurde der Ansatz mit 500 ml N-Methylpyrrolidon verdünnt und von den festen Bestandteilen des Reaktionsgemisches abgesaugt. Der Polyether wurde anschließend in der 7-fachen Menge Wasser/Ethanol (Volumenverhältnis = 7 : 3) ausgefällt, von der Flüssigkeit durch Filtration getrennt und nach 18-stündigem Trocknen bei Raumtemperatur in möglichst wenig Methylenchlorid gelöst. Die Lösung wurde zur 5-fachen Menge Ethanol zugetropft, wobei das Polykondensat ausfiel. Das Produkt wurde im Vakuum bei 140 Grad C bis zur Gewichtskonstanz getrocknet. Ausbeute: 597,3 g (83 % d.Th.)

Die Analyse erfolgte durch H-1- bzw. C-13-NMR-Spektroskopie.

An durch thermoplastische Verarbeitung (Extrusion) erhaltenen Werkstücken wurden folgende Eigenschaften ermittelt.

| Mw | Reißdehnung (%) | E-Modul (MPa) | Zugfestigkeit (MPa) | UL94-Klassifiz. | Rauchdichte 1,5/4 min) | Glastemp. (Grad C) | Wasseraufnahme (23 Grad C) (%) |
|---|---|---|---|---|---|---|---|
| 87700 | 52 | 3100 | 83 | V-O | 1/2 | 190 | 0,64 |

1) GPC, Eichung mit Polystyrol
2) DIN 53 455
3) Test der Underwriter Laboratories, USA; V-O ist beste Klassifizierung
4) Rauchkammer entsprechend den Vorschriften des National Bureau of Standards, USA
5) Differential Scanning Calorimetry (vgl. E.A. TURI, Ed. "Thermal Characterization of Polymeric Materials pg. 169, Academic Press, New York 1981)
6) DIN 53 495

Beispiele 2 und 3

Die Umsetzung wurde wie im Beispiel 1 beschrieben durchgeführt, mit der Ausnahme, daß das Molverhältnis Bisphenol A: 9,9-Bis(4′-hydroxyphenyl)fluoren = 5 : 5 bzw.3 : 7 betrug. Man erhält dann Kunststoffe mit folgenden Eigenschaften:

| Beisp. Nr. | Molverh. | Reißdehnung (%) | E-Modul (MPa) | Zugfestigkeit (MPa) | UL94-Klassif. | Rauchdichte (1,5/4 min) | Glastemp. (Grad C) | Wasseraufnahme (23 Grad C) (%) |
|---|---|---|---|---|---|---|---|---|
| 2 | 5 : 5 | 44 | 2963 | 86 | V-1 | - | 185 | 0,56 |
| 3 | 3 : 7 | 42 | 3079 | 86 | V-0 | 4/11 | - | - |

Beispiele 4, 5 und 6

Die Umsetzung wurde wie im Beispiel I beschrieben durchgeführt, wobei jedoch das 4,4′-Difluorbenzophenon durch 4,4″-Difluor-iso-(I) und/oder -terephthalophenon(II) ersetzt war und Bisphenol A und 9,9-Bis(4′-hydroxyphenyl)fluoren im Molverhältnis 1 : 1 eingesetzt wurden.

Man erhält Produkte mit folgenden Glastemperaturen

| Beisp. Nr. | aktiviertes Dihalogenid | Glastemperatur des Polykondensats (Grad C) |
|---|---|---|
| 4 | I | 202 |
| 5 | II | 185 |
| 6 | je 50 % I und II | 193 |

## Ansprüche

1. Hochtemperaturbeständige, thermoplastisch verarbeitbare Polyarylenether mit wiederkehrenden Struktureinheiten der allgemeinen Formel (1)

$$\left[ (-A-O-B-O)_m - (-A-O-C-O)_n \right] \quad (1),$$

worin

A: 4,4′-bzw. 4,4″-Benzophenon-Einheiten der Formel

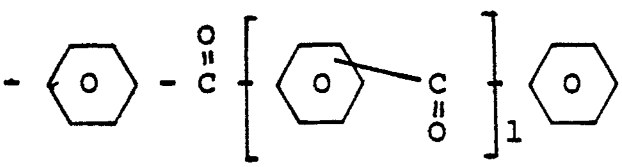

-, mit l = 0 oder 1,

B: 9,9-Bis(4′-phenyl)fluoren-Einheiten der Formel

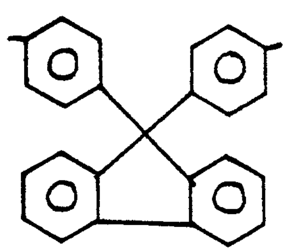

und

C: 2,2-Bis(4-phenyl)propan-Einheiten der Formel

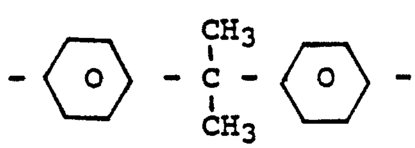

sind, die über Sauerstoffatome etherartig miteinander verbunden sind, wobei die Zusammensetzung der Polyarylenether durch m und n, für die das Molverhältnis m : n = 30 : 70 bis 90 : 10 gilt, gegeben ist.

2. Polyarylenether nach Anspruch 1, dadurch gekennzeichnet, daß das Molverhältnis m : n = 40 : 60 bis 80 : 20 und insbesondere 50 : 50 bis 70 : 30 beträgt.

3. Polyarylenether nach Anspruch 1, dadurch gekennzeichnet, daß sie als Benzophenoneinheiten A nur solche der Formel mit l = 0 enthalten.

4. Polyarylenether nach Anspruch 1, dadurch gekennzeichnet, daß sie als Benzophenoneinheiten A nur solche der Formel mit l = 1 enthalten.

5. Polyarylenether nach Anspruch 1, dadurch gekennzeichnet, daß sie als Benzophenoneinheiten A, sowohl solche mit l = 0 als auch solche mit l = 1 enthalten.

6. Polyarylenether nach den Ansprüchen 1 und 5, dadurch gekennzeichnet, daß das Mol-Verhältnis der A-Strukturen mit l = 0 zu den A-Strukturen mit l = 1 im Bereich von 99,9 : 0,1 bis 0,1 : 99,9 liegt.

7. Polyarylenether nach den Ansprüchen 1 bis 6, dadurch gekennzeichnet, daß die Folge der B- und C-enthaltenden Teilstücke in der allgemeinen Formel (1) statistisch ist.

8. Polyarylenether nach den Ansprüchen 1 bis 6, dadurch gekennzeichnet, daß die Folge der B- und C-enthaltenden Teilstücke in der allgemeinen Formel (1) alternierend ist.